# EUROPÄISCHE PATENTSCHRIFT

(11) **EP 1 125 462 B1**
(45) Veröffentlichungstag und Bekanntmachung des Hinweises auf die Patenterteilung: **20.10.2004**
(21) Anmeldenummer: 99959228.0
(22) Anmeldetag: 02.11.1999
(51) Int. Cl.: H04Q 7/38

(54) **VERFAHREN ZUR OPTIMIERUNG DER ZUR NACHBARKANALÜBERWACHUNG NÖTIGEN UNTERBRECHUNGSPAUSEN**
METHOD FOR OPTIMIZING INTERRUPTION PHASES REQUIRED FOR ADJACENT CHANNEL MONITORING
PROCEDE D'OPTIMISATION DES PHASES D'INTERRUPTION NECESSAIRES POUR LA SURVEILLANCE DE CANAUX

(30) Priorität: 04.11.1998 DE 19850866; 09.11.1998 DE 19851600
(43) Veröffentlichungstag der Anmeldung: 22.08.2001
(73) Patentinhaber: SIEMENS AKTIENGESELLSCHAFT, 80333 München (DE)
(72) Erfinder: RAAF, Bernhard, D-81475 München (DE)
(86) Internationale Anmeldenummer: PCT/DE1999/003484
(87) Internationale Veröffentlichungsnummer: WO 2000/027150

(56) Entgegenhaltungen:
- WO-A-92/10886
- WO-A-94/29981
- WO-A-97/25827

## Beschreibung

Die Erfindung betrifft eine Basisstation eine Mobilstation und ein Verfahren zur Datenübertragung in einem Kommunikationssystem, insbesondere in einem CDMA-Mobilfunksystem, wobei die Daten strukturiert in Rahmen derart übertragen werden, daß es einer Mobilstation möglich ist, während einer oder mehrerer Unterbrechungsphasen, in der bzw. in denen sie das Empfangen (der bisherigen Quelle oder der Daten der Basisstation) und/oder das Verarbeiten empfangener Daten oder das Senden unterbricht, andere Funktionen auszuführen, insbesondere über eine Empfangseinrichtung Messungen durchzuführen. Unter "Übertragen" wird im folgenden auch Senden und/oder Empfangen verstanden.

In Kommunikationssystemen werden Daten (beispielsweise Sprachdaten, Bilddaten oder Systemdaten) auf Übertragungsstrecken zwischen Basisstationen und Mobilstationen übertragen. Bei Funk-Kommunikationssystemen erfolgt dies mit Hilfe von elektromagnetischen Wellen über eine Luft- oder Funkschnittstelle. Dabei werden Trägerfrequenzen genutzt, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das UMTS (Universal Mobile Telecommunication System) oder andere Systeme der dritten Generation sind Frequenzen im Frequenzband von 2.000 MHz vorgesehen.

Insbesondere in zukünftigen CDMA-Systemen wird beispielsweise in Abwärtsrichtung, das heißt in der Richtung von einer Basisstation zu einer Mobilstation, von der Basisstation im wesentlichen kontinuierlich gesendet. Die beim Senden übertragenen Daten sind üblicherweise in Rahmen strukturiert, die jeweils eine vorgegebene Länge haben. Insbesondere bei unterschiedlichen Diensten, wie Sprachdatenübertragung und Videodatenübertragung, können die Rahmen auch unterschiedliche Struktur und Länge haben. Die Struktur und/oder Länge jedes Rahmens in einer kontinuierlichen Folge von Rahmen ist jedoch vorgegeben und/oder wird durch die Mobilstation erkannt.

Insbesondere in zellularen Mobilfunksystemen muß die Mobilstation gelegentlich auch andere Funktionen als Datenempfang ausführen, die zumindest beim Betrieb nur einer einzigen Empfangseinrichtung nicht gleichzeitig ausgeführt werden können. Beispielsweise muß die Mobilstation in einem zellular aufgebauten Funk-Kommunikationssystem, in dem die Basisstationen verschiedener Zellen auf unterschiedlichen Frequenzen senden, von Zeit zu Zeit messen, ob sie Funksignale von einer anderen Basisstation mit guter Empfangsqualität empfangen kann. Hierzu stellt die Mobilstation ihre Empfangseinrichtung auf eine andere Frequenz als die Frequenz ein, auf der sie momentan Daten empfängt.

Um ohne Unterbrechung von der Basisstation zu der Mobilstation senden zu können, wurde bereits vorgeschlagen, die Mobilstation mit einer zweiten Empfangseinrichtung auszustatten. Aus Kostengründen wird diese Lösung in der Praxis jedoch meist abgelehnt.

Es ist ein anderer Vorschlag bekannt, nach welchem die Basisstation das Senden zu vorgegebenen Zeiten unterbricht, um es der Empfangsstation zu ermöglichen, eine Nachbarkanalsuche (Suche nach einer benachbarten Basisstation oder nach von diesen Basisstationen ausgesendeten bestimmten Datenpaketen, worunter im folgenden auch Synchronisations-, Frequenzkorrektur- oder Pilotsignalbursts verstanden werden können) über ihre einzige Empfangseinrichtung durchzuführen.

Um einen Datenverlust zu vermeiden, sendet die Basisstation die Daten zuvor mit einer höheren Senderate als mit der im wesentlichen konstanten Dauer-Senderate. Damit dies nicht zu höheren Bitfehlerraten (BER) führt, muß zusätzlich während dieser Zeit die Sendeleistung erhöht werden.

Die Frequenz, mit der die Unterbrechungsphasen wiederkehren, und die Länge der Unterbrechungsphasen hängen von dem jeweiligen System und auch von dem jeweiligen Betriebszustand des Systems ab. Beispielsweise reichen für eine Nachbarkanalsuche einer Mobilstation in einem zellular organisierten Funk-Kommunikationssystem Unterbrechungsphasen mit jeweils einer Länge von jeweils 5 bis 6 ms aus. Aus WO-A-97 25827 ist ein Verfahren zur Datenübertragung bekannt, bei dem während der Übertragung Unterbrechungsphasen zur Beobachtung einer Nachbarbasisstation eingefügt werden. Allerdings ist dabei vorgesehen, daß die Unterbrechungsphasen in regelmäßigen Abständen eingefügt werden, was den Nachteil mit sich bringt, daß mit jeder Unterbrechungsphase die Effizienz der Datenübertragung reduziert wird.

Da mit der Anzahl der eingefügten Unterbrechungsphasen auch die Einbußen in der Übertragungsqualität zunehmen, besteht der Wunsch, möglichst wenige Unterbrechungsphasen einzulegen.

Beispielsweise enthält ein durch eine GSM-Basisstation ausgesendeter GSM-Rahmen acht Zeitschlitze, in denen jeweils ein Datenpaket enthalten ist. Die von den GSM-Basisstationen ausgesendeten Datenpakete, wie z.B. Synchronisationsdatenpakete (zu detektierende Datenpakete, Synchronisationburst), Frequenzkorrekturdatenpakete (charakteristische Datenpakete, Frequencycorrectionburst) und Normaldatenpakete gehorchen alle dem gleichen Zeitraster. Von den GSM-Basisstationen werden 4 mal alle 10 Zeitrahmen (GSM-Rahmen) und daraufhin nach 11 Zeitrahmen (GSM-Rahmen)(insgesamt 51 Zeitrahmen) ein Frequenzkorrekturdatenpaket und jeweils einen Zeitrahmen später ein Synchronisationsdatenpaket ausgesendet.

Würden nun Unterbrechungsphasen entsprechend dem GSM-Standard mit einer Periode von 26 Zeitrahmen (GSM-Rahmen) eingefügt, so würde aufgrund der Tatsache, daß die Periode von 51 Zeitrahmen und die Periode von 26 Zeitrahmen keinen gemeinsamen Teiler haben, eine zyklische Verschiebung der beiden Zeitrahmenperioden stattfinden, so daß nach maximal 11 mal 26 Zeitrahmen, also nach 11 Beobachtungsrahmen ein Empfang des gesuchten zu detektierenden Datenpaketes erfolgen würde, falls die Mobilstation nicht zu weit von der jeweiligen benachbarten Basisstation entfernt ist oder zu starke Störungen bei der Übertragung auftreten.

Aufgabe der vorliegenden Erfindung ist es, ein Verfahren zur Datenübertragung, eine Mobilstation und eine Basisstation anzugeben, die bei guter Übertragungsqualität eine zuverlässige Beobachtung zweiter Basisstationen ermöglichen.

Die Aufgabe wird durch die unabhängigen Patentansprüche gelöst. Weiterbildungen sind Gegenstand der abhängigen Ansprüche.

Die Erfindung beruht demnach insbesondere auf dem Gedanken, entgegen dem Stand der Technik Unterbrechungsphasen, in denen die Mobilstation das Übertragen, insbesondere das Empfangen, der von der ersten Basisstation gesendeten Daten und/oder das Verarbeiten der empfangenen Daten unterbricht, nicht mit einer maximalen effektiven Gesamtdauer einzufügen, die bei optimalen Übertragungsverhältnissen zu einer gesicherten Detektion eines zu detektierenden Datenpaketes nötig wäre, sondern weniger und/oder kürzere Unterbrechungsphasen einzufügen.

Durch aufwendige Simulationen mit eigens für diesen Zweck entwickelten Simulationswerkzeugen stellte sich heraus, daß bei einer Verkürzung der effektiven Gesamtdauer der Unterbrechungsphasen entgegen dem Stand der Technik auf eine Dauer von maximal 9 oder maximal 10 Beobachtungsrahmen die effektive Gesamtdauer der Unterbrechungsphasen um einen viel größeren Anteil reduziert werden kann, als im Gegenzug die theoretische Detektionswahrscheinlichkeit für ein zu detektierendes Datenpaket abnimmt. So wird erreicht, daß die Übertragungsqualit:ät von der ersten Basisstation zu einer Mobilstation verbessert wird, im Gegenzug aber die Detektionswahrscheinlichkeit für ein zu detektierendes Datenpaket verglichen dazu groß bleibt.

Die Daten können dabei beispielsweise von der ersten Basisstation zu der Mobilstation gesendet werden, wobei zumindest während bestimmter Sendephasen Unterbrechungsphasen eingelegt werden, in denen die erste Basisstation das Senden unterbricht und die Mobilstation beispielsweise das Empfangen und/oder das Verarbeiten empfangener Daten unterbricht, und in denen die Mobilstation auf den Empfang charakteristischer Datenpakete und/oder zu detektierender Datenpakete, die periodisch von einer zweiten Basisstation gesendet werden, geschaltet wird, und die maximale effektive Gesamtdauer der Unterbrechungsphasen kürzer ist, als bei optimalen Übertragungssverhältnissen zu einer gesicherten Detektion eines zu detektierenden Datenpaketes nötig wäre.

Bei den von der zweiten Basisstation gesendeten Datenpaketen kann es sich auch um zu detektierende Datenpakete (Synchronisationsdatenpakete) oder charakteristische Datenpakete (Frequenzkorrekturdatenpakete) handeln.

Bei einem ersten Übertragungsverfahren, das von einer ersten Basisstation verwendet wird, kann es sich dabei um ein CDMA-Verfahren handeln, und bei einem zweiten Übertragungsverfahren, das von einer zweiten Basisstation verwendet wird, um ein GSM-Verfahren handeln.

Unter GSM-Rahmen versteht man im Rahmen der Anmeldung auch einen Rahmen der 8 Zeitschlitze enthält, und eine Dauer von 4, 6 ms aufweist.

Unter Beobachtungsrahmen versteht man im Rahmen der Anmeldung auch eine Zeitdauer, die mindestens erforderlich ist, um einen GSM-Rahmen zu beobachten. Die genaue Dauer eines Beobachtungsrahmens ist dabei implementierungsabhängig; sie ist jedoch um eine vollständige Detektion eines GSM-Rahmens zu gewährleisten und um die Zeit, die zum Umschalten der Syntheziserfrequenz benötigt wird, zu berücksichtigen, in der Regel länger als die Dauer eines GSM-Rahmens und kann so auch eine Dauer von 9 Zeitschlitzen, 10 Zeitschlitzen (5,7 ms), 11 Zeitschlitzen oder 12 Zeitschlitzen (6,9 ms) aufweisen.

Da zur Einlegung der Unterbrechungsphasen zum Zwecke der Nachbarkanalsuche viele unterschiedliche Varianten möglich sind, bezeichnet im Rahmen dieser Anmeldung der Begriff "maximale effektive Gesamtdauer der Unterbrechungsphasen" die Summe aller Unterbrechungsphasen die maximal zur Beobachtung einer Nachbarbasisstation eingelegt werden. Dies schließt jedoch nicht aus, daß bei einer späteren Wiederholung der Nachbarkanalsuche weitere Unterbrechungsphasen eingelegt werden, wobei allerdings eine neue effektive Gesamtdauer der Unterbrechungsphasen gebildet wird. Die einzelnen Unterbrechungsphasen können dabei jeweils die Dauer eines Beobachtungsrahmens aufweisen, können aber auch von beliebig anderer Dauer sein. Die Dauer einer Unterbrechungsphase kann auch ein Vielfaches oder einen Bruchteil der Dauer eines Beobachtungsrahmens aufweisen. Es ist auch möglich, daß die einzelnen Unterbrechungsphasen unterschiedlicher Dauer sind.

Eine Weiterbildung der Erfindung sieht vor, daß zwischen dem Beginn einer ersten Unterbrechungsphase und dem Beginn einer zweiten Unterbrechungsphase eine Dauer von 52 GSM-Rahmen liegt.

Es konnte durch Simulationen gezeigt werden, daß damit die effektive Gesamtdauer der Unterbrechungsphasen auf 91% reduziert werden kann, wobei man im Gegenzug bei der Detektionswahrscheinlichkeit nur einen Verlust von 2% in Kauf nehmen muß, sowie eine Halbierung der Suchgeschwindigkeit gegenüber der GSM-Such-Geschwindigkeit.

Eine andere Ausgestaltung der Erfindung sieht vor, zwischen dem Beginn einer ersten Unterbrechungsphase und dem Beginn einer zweiten Unterbrechungsphase eine Dauer von 6 GSM-Rahmen einzufügen, und zwischen dem Beginn einer zweiten Unterbrechungsphase und dem Beginn einer dritten Unterbrechungsphase eine Dauer von 46 GSM-Rahmen einzufügen.

Hier konnte durch Simulationen gezeigt werden, daß bei GSM-Suchgeschwindigkeit die maximale effektive Gesamtdauer der Unterbrechungsphasen um 9% reduziert werden kann bei einem vergleichsweise sehr geringem Verlust an Detektionswahrscheinlichkeit von 2%.

Eine Weiterbildung der Erfindung sieht vor, daß schon vor Erreichen der maximalen effektiven Gesamtdauer der Unterbrechungsphasen das Einlegen weiterer Unterbrechungsphasen beendet, eingeschränkt oder gesteuert fortgesetzt wird. Dazu wird nach dem Empfang eines zu detektierenden Datenpaketes oder eventuell eines anderen das Ende der Nachbarkanalsuche indizierenden Datenpaketes, wie beispielsweise eines charakteristischen Datenpaketes, eine entsprechende Nachricht von der Mobilstation zur ersten Basisstation übermittelt.

Während also beispielsweise in Abwärtsrichtung Daten von einer ersten Basisstation zu einer Mobilstation übertragen werden, werden zumindest während bestimmter Sendephasen Unterbrechungsphasen eingelegt, in denen die Mobilstation das Empfangen der von der ersten Basisstation gesendeten Daten und/oder das Verarbeiten der empfangenen Daten unterbricht, und in denen die Mobilstation auf den Empfang von Datenpakete, die von einer zweiten Basisstation gesendet werden, geschaltet wird. In Abhängigkeit von einem Empfangsergebnis bezüglich dieser von einer zweiten Basisstation gesendeten Datenpakete werden Informationen von der Mobilstation zur ersten Basisstation gesendet, die das Einlegen von Unterbrechungsphasen beeinflussen.

So ist es möglich, das Einlegen von Unterbrechungsphasen möglichst bald zu beenden und somit möglichst einzuschränken, sobald genügend Informationen über die zu beobachtenden zweiten Basisstationen bekannt sind und somit die Übertragungsqualität zu verbessern. Dadurch wird erreicht, daß die Gesamtdauer der Unterbrechungsphasen weiter reduziert werden kann.

Anhand der Zeichnungen werden nun Ausführungsbeispiele der Erfindung näher beschrieben. Die Erfindung ist jedoch nicht auf diese Ausführungsbeispiele beschränkt. Die einzelnen Figuren der Zeichnung zeigen:
- Fig. 1: Prinzipschaltbild eines Mobilfunksystems;
- Fig. 2: Prinzipschaltbild einer Mobilstation;
- Fig. 3: schematische Darstellung der Einfügung von Unterbrechungsphasen während einer Sendephase.

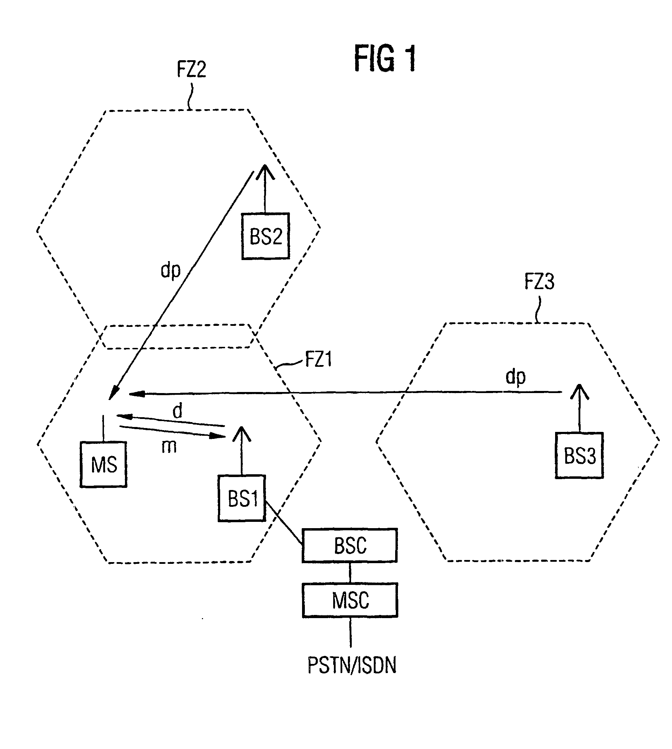

In Figur 1 ist ein zellulares Mobilfunknetz, das beispielsweise aus einer Kombination eines GSM (Global System for Mobile Communication)-Systems mit einem UMTS (Universal Mobile Telecommunication System) - System besteht, dargestellt, das aus einer Vielzahl von Mobilvermittlungsstellen MSC besteht, die untereinander vernetzt sind, bzw. den Zugang zu einem Festnetz PSTN/ISDN herstellen. Ferner sind diese Mobilvermittlungsstellen MSC mit jeweils zumindest einem Basisstationscontroler BSC verbunden, der auch durch ein Datenverarbeitungssystem gebildet sein kann.

Jeder Basisstationscontroler BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignale Informationen innerhalb von Funkkanälen, die innerhalb von Frequenzbändern liegen, übertragen werden. Die Reichweite der Funksignale einer Basisstation definieren im wesentlichen eine Funkzelle FZ.

Basisstationen BS und ein Basisstationscontroler BSC können zu einem Basisstationssystem zusammengefaßt werden. Das Basisstationssystem BSS ist dabei auch für die Funkkanalverwaltung bzw. -zuteilung, die Datenratenanpaßung, die Überwachung der Funküertragungsstrecke, Hand-Over-Prozeduren, und im Falle eines CDMA-Systems für die Zuteilung der zu verwendenden Spreizcodesets, zuständig und übermittelt die dazu nötigen Signalisierungsinformationen zu den Mobilstationen MS.

Im Falle eines Duplex-Systems können bei FDD (Frequency Division Duplex)-Systemen, wie beispielsweise dem GSM-System, für den Uplink (Mobilstation zur Basisstation) andere Frequenzbänder vorgesehen sein als für den Downlink (Basisstation zur Mobilstation) und bei TDD (Time Division Duplex)-Systemen, wie das DECT (Digital Enhanced Cordless Telecommunications)-System für den Up- bzw. Downlink unterschiedliche Zeitabschnitte vorgesehen sein. Innerhalb der unterschiedlichen Frequenzbänder können durch ein FDMA (Frequency Division Multiple Access) Verfahren mehrere Frequenzkanäle realisiert werden.

Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme wie CDMA-Systeme, insbesondere Wide-Band-CDMA-Systeme oder TD/CDMA-Systeme abgebildet werden. Unter erster Basisstation BS1 versteht man insbesondere eine UMTS-Basisstation oder eine CDMA-Basisstation, unter zweiten und/oder dritten Basisstationen BS2,BS3 insbesondere zu beobachtende GSM-(Nachbar)Basisstationen und unter Mobilstation insbesondere eine Dualmode-Mobilstation, die sowohl für den Empfang/das Senden von GSM-Signalen als auch für den Empfang/das Senden von UMTS-Signalen oder CDMA-Signalen ausgestaltet ist, die gegebenenfalls auch für einen stationären Betrieb hergerichtet sein kann.

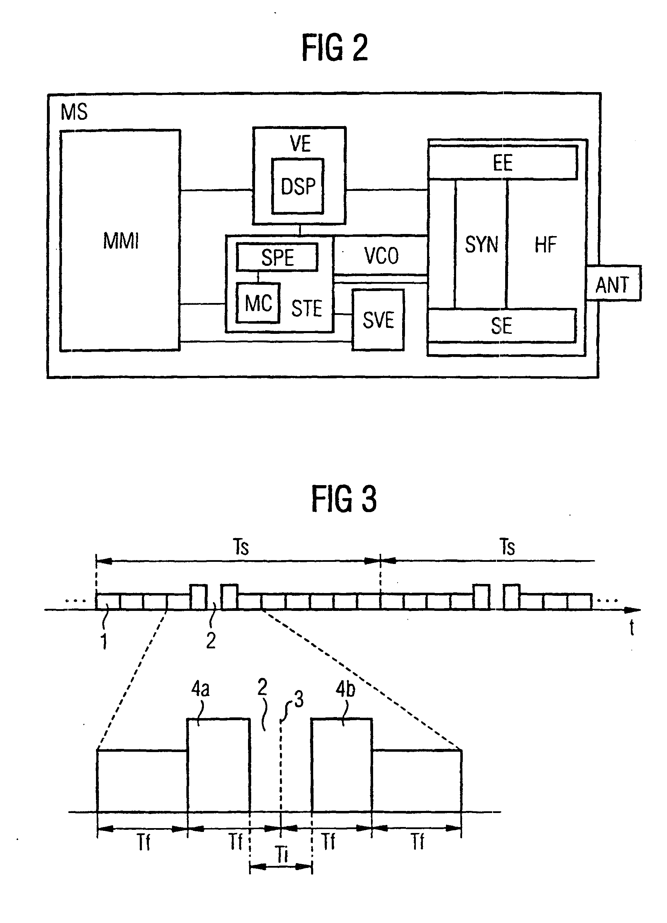

Figur 2 zeigt eine Funkstation, die eine Mobilstation MS sein kann, bestehend aus einer Bedieneinheit MMI, einer Steuereinrichtung STE, einer Verarbeitungseinrichtung VE, einer Stromversorgungseinrichtung SVE, einer Empfangseinrichtung EE und einer Sendeeinrichtung SE.

Die Steuereinrichtung STE besteht im wesentlichen aus einem programmgesteuerten Mikrocontroler MC, der schreibend und lesend auf Speicherbausteine SPE zugreifen kann. Der Microcontroler MC steuert und kontrolliert alle wesentlichen Elemente und Funktionen der Funkstation, steuert im wesentlichen den Kommunikations- und Signalisierungsablauf, reagiert auf Tastatureingaben, indem er die entsprechenden Steuerprozeduren ausführt und ist auch für die Versetzung des Gerätes in unterschiedlich Betriebzustände zuständig.

Die Verarbeitungseinrichtung VE kann auch durch einen digitalen Signalprozessor DSP gebildet sein, der ebenfalls auf Speicherbausteine SPE zugreifen kann.

In den flüchtigen oder nicht flüchtigen Speicherbausteinen SPE sind die Programmdaten, die zur Steuerung der Funkstation und des Kommunikationsablaufs, insbesondere auch der Signalisierungsprozeduren, benötigt werden, Geräteinformationen, vom Benutzer eingegebene Informationen und während der Verarbeitung von Signalen entstehende Informationen gespeichert.

Der Hochfrequenzteil HF besteht aus der Sendeeinrichtung SE, mit einem Modulator und einem Verstärker und einer Empfangseinrichtung EE mit einem Demodulator und ebenfalls einem Verstärker.

Der Sendeeinrichtung SE und der Empfangseinrichtung EE wird über den Synthesizer SYN die Frequenz eines spannungsgeregelten Oszilators VCO zugeführt. Mittels des spannungsgesteuerten Oszillators VCO kann auch der Systemtakt zur Taktung von Prozessoreinrichtungen des Gerätes erzeugt werden.

Zum Empfang und zum Senden von Signalen über die Luftschnittstelle eines Mobilfunksystems ist eine Antenneneinrichtung ANT vorgesehen.

Bei der Funkstation kann es sich auch um eine Basisstation BS handeln. In diesem Fall wird die Bedieneinheit durch eine Verbindung zu einem Mobilfunknetz, beispielsweise über einen Basisstationscontroler BSC bzw. eine Vermitt:lungseinrichtung MSC ersetzt. Um gleichzeitig Daten mit mehreren Mobilstationen MS auszutauschen, verfügt die Basisstation BS über eine entsprechende Vielzahl von Sende- bzw. Empfangseinrichtungen.

Fig. 3 zeigt die Rahmenstruktur einer Datenübertragung mit geringer Verzögerungszeit, insbesondere der Sprachübertragung in einem UMTS (Universal Mobile Telecommunication System), in dem jeweils innerhalb eines Multirahmens zwölf einzelne Rahmen 1 zur Datenübertragung enthalten sind. Dabei zeigt die Darstellung insbesondere eine Sendephase im Downlink von einer ersten Basisstation BS1, insbesondere einer UMTS-Basisstation BS1 zu einer Mobilstation MS, insbesondere einer Dualmode-Mobilstation MS, die neben dem Empfang von UMTS-Daten auch für den Empfang von GSM-Datenpaketen ausgestaltet ist. Die im folgenden angestellten Ausführungen sind im wesentlichen auf den Downlink beschränkt. Es ist aber selbstverständlich, daß die Erfindung nicht nur in eine Downlink-Übertragung, sondern auch in eine Uplink-Übertragung eingebracht werden kann. Es liegt in Rahmen des fachmännischen Handelns die im folgenden aufgezeigten Ausführungsbeispiele für den Downlink in eine Uplink-Übertragung einzubringen.

Die einzelnen Rahmen 1 haben jeweils eine Sendelänge Tf von 10 ms, so daß der Multirahmen insgesamt eine Sendelänge Ts von 120 ms hat. Jeweils der fünfte und der sechste einzelne Rahmen 1 weisen eine gemeinsame, gegebenenfalls ihre Rahmengrenze 3 überlappende Unterbrechungsphase 2 auf, die eine Länge Ti hat. Die Länge Ti beträgt beispielsweise 6 ms. Die Teilabschnitte des ersten Rahmens 4a, der vor der Unterbrechungsphase 2 beginnt, und des zweiten Rahmens 4b, der nach der Unterbrechungsphase 2 endet, sind gleich lang beziehungsweise gleich groß. Bei dem in Fig. 3 gezeigten Ausführungsbeispiel werden Sprachdaten übertragen, so daß eine maximale Verzögerung bei der Auswertung der von der Mobilstation empfangenen Daten in Höhe von 10 ms, das heißt einer Rahmenlänge Tf, akzeptabel ist. Die Daten innerhalb eines Rahmens werden umsortiert, gemeinsam codiert und einander überlagert gesendet. Im Ausführungsbeispiel werden die Senderate des ersten Rahmens 4a und des zweiten Rahmens 4b jeweils derart erhöht, daß die gleiche Menge von zu sendenden Informationen, die in nicht komprimierten Rahmen 1 über die Rahmenlänge Tf hinweg gesendet werden, in einem Zeitraum Tc = Tf - Ti/2 gesendet werden.

Dabei wird während der Unterbrechungsphasen zumindest das Senden von Daten zu einer bestimmten, die Nachbarkanalsuche durchführenden Mobilstation unterbrochen, während das Senden zu anderen Mobilstationen fortgesetzt werden kann, was durch den Einsatz eines Vielfachzugriffsverfahrens, beispielsweise eines CDMA-Verfahrens, ermöglicht wird.

Ein durch die GSM-Basisstation ausgesendeter GSM-Rahmen enthält acht Zeitschlitze, in denen jeweils ein Datenpaket enthalten ist. Die von den GSM-Basisstationen BS2 ausgesendeten Datenpakete, wie z.B. Synchronisationsdatenpakete (zu detektierende Datenpakete, Synchronisationburst), Frequenzkorrekturdatenpakete (charakteristische Datenpakete, Frequencycorrectionburst) und Normaldatenpakete gehorchen alle dem gleichen Zeitraster. Von den GSM-Basisstationen werden 4 mal alle 10 Zeitrahmen (GSM-Rahmen) und daraufhin nach 11 Zeitrahmen (GSM-Rahmen)(insgesamt 51 Zeitrahmen) ein Frequenzkorrekturdatenpaket und jeweils einen Zeitrahmen später ein Synchronisationsdatenpaket ausgesendet.

Würden nun Unterbrechungsphasen entsprechend dem GSM-Standard mit einer Periode von 26 Zeitrahmen (GSM-Rahmen) eingefügt, so würde aufgrund der Tatsache, daß die Periode von 51 Zeitrahmen und die Periode von 26 Zeitrahmen keinen gemeinsamen Teiler haben, eine zyklische Verschiebung der beiden Zeitrahmenperioden stattfinden, so daß nach maximal 11 mal 26 Zeitrahmen, also nach 11 Beobachtungsrahmen ein Empfang des gesuchten zu detektierenden Datenpaketes erfolgen würde, falls die Mobilstation nicht zu weit von der jeweiligen benachbarten Basisstation BS2, BS3 entfernt ist oder zu starke Störungen bei der Übertragung auftreten.

Wird nun die maximale effektive Gesamtdauer der Unterbrechungsphasen entgegen dem Stand der Technik bei der Beobachtung von GSM-Basisstationen während der Gesprächsphase einer Mobilstation MS mit einer UMTS-Basisstation BS1 von 11 Beobachtungsrahmen auf beispielsweise 10 oder 9 Beobachtungsrahmen reduziert, so kann die Datenübertragung im Rahmen des Gesprächs der Mobilstation MS über die Basisstation BS1 verbessert werden. Die damit verbundene Reduzierung der Detektionswahrscheinlichkeit ist vergleichsweise gering und somit akzeptabel.

Eine Ausführungsvariante der Erfindung sieht vor, daß zu detektierende Datenpakete von einer zweiten Basisstation BS2 innerhalb von GSM-Rahmen übertragen werden, und in die Downlinkdatenübertragung von einer UMTS-Basisstation BS1 zu einer Mobilstation MS Unterbrechungsphasen zur Nachbarkanalbeobachtung eingefügt werden, wobei zwischen dem Beginn einer ersten Unterbrechungsphase und einer zweiten Unterbrechungsphase eine Dauer von 52 GSM-Rahmen liegt.

Eine andere Ausführungsvariante sieht vor, daß zwischen dem Beginn einer ersten Unterbrechungsphase und einer zweiten Unterbrechungsphase eine Dauer von 26 GSM-Rahmen liegt.

Eine weitere Ausgetaltung der Erfindung sieht vor, daß zwischen dem Beginn einer ersten Unterbrechungsphase und einer zweiten Unterbrechungsphase eine Dauer von n1 GSM-Rahmen liegt, und zwischen dem Beginn einer zweiten Unterbrechungsphase und einer dritten Unterbrechungsphase eine Dauer von n2 GSM-Rahmen liegt.

Eine andere Ausführungsvariante der Erfindung sieht vor, daß zwischen dem Beginn einer ersten Unterbrechungsphase und einer zweiten Unterbrechungsphase eine Dauer von 6 GSM-Rahmen liegt, und zwischen dem Beginn einer zweiten Unterbrechungsphase und einer dritten Unterbrechungsphase eine Dauer von 46 GSM-Rahmen liegt.

Eine andere Ausführungsvariante der Erfindung sieht vor, daß zwischen dem Beginn einer ersten Unterbrechungsphase und einer zweiten Unterbrechungsphase eine Dauer von 16 GSM-Rahmen liegt, und zwischen dem Beginn einer zweiten Unterbrechungsphase und einer dritten Unterbrechungsphase eine Dauer von 36 GSM-Rahmen liegt.

Beispielsweise während sich die Mobilstation MS im Gesprächszustand oder Nutzdatenübertragungszustand mit einer aktuellen UMTS-Basisstation BS1 befindet, werden die Unterbrechungsphasen zu bestimmten Zeitpunkten/-abschnitten, zwischen denen feste oder unterschiedlich lange Zeiträume liegen können, in die Downlinkübertragung eingefügt, während derer die Empfangseinrichtung der Mobilstation MS auf den Empfang von Datenpaketen von jeweils benachbarten GSM-Basisstationen BS2,BS3 geschaltet wird. Während der Unterbrechungsphase 2 unterbricht also die UMTS-Basisstation das Senden von Daten zur Mobilstation MS und die Mobilstation MS das Empfangen und/oder das Verarbeiten von Daten, die von der UMTS-Basisstation BS1 gesendet werden. Die Mobilstation MS führt mittels der Empfangseinrichtung EE eine Nachbarkanalsuche durch, indem die Steuereinrichtung STE die Empfangseinrichtung EE auf den Empfang von benachbarten GSM-Basisstationen BS2 und die von diesen gesendeten Datenpakete schaltet, um gegebenenfalls auftretende Synchronisationsdatenpakete dp, die von benachbarten GSM-Basisstationen BS2, BS3 gesendet werden, zu empfangen.

Ziel der Nachbarkanalsuche ist auch die Detektion eines zu detektierenden Synchronisationsdatenpaketes. Empfängt bei einer Ausführungsvariante der Erfindung die Mobilstation MS in einer dieser Unterbrechungsphasen ein zu detektierendes Synchronisationsdatenpaket, so ist die Nachbarkanalsuche zumindest hinsichtlich dieser Basisstation BS2 beendet, und die Mobilstation MS sendet entsprechende Steuerinformationen m (SCH-found) gegebenenfalls über geeignete Signalisierungskanäle zur ersten Basisstation BS1, der UMTS-Basisstation. Die UMTS-Basisstation BS1 fügt daraufhin zumindest zunächst keine weiteren Unterbrechungsphasen in den Downlink-Datenstrom d ein. In diesem Fall ist die effektive Gesamt:dauer der Unterbrechungsphasen in der Regel kleiner als die maximale effektive Gesamtdauer der Unterbrechungsphasen.

Die Detektion eines zu detektierenden Synchronisationsdatenpaketes kann auch über den Empfang eines charakteristischen Frequenzkorrekturdatenpaketes, erreicht werden, da aufgrund der bekannten Rahmenstruktur nach dem Empfang eines Frequenzkorrekturdatenpaketes die Lage eines Synchronisationsdatenpaketes bekannt ist. Da im GSM-System die Frequenzkorrekturdatenpakete einen Zeitrahmen vor den Synchronisationsdatenpaketen von den Basisstationen BS2,BS3 ausgesendet werden, kann die Mobilstation MS neben dem Empfang von Synchronisationsdatenpaketen bei einer Ausführungsvariante der Erfindung auch auf den Empfang von Frequenzkorrekturdatenpaketen geschaltet werden. Dabei führt die Mobilstation MS in den Unterbrechungsphasen mittels der Empfangseinrichtung EE eine Nachbarkanalsuche durch, indem die Steuereinrichtung STE die Empfangseinrichtung EE auf den Empfang von benachbarten GSM-Basisstationen BS2 schaltet, um gegebenenfalls auftretende Synchronisationsdatenpakete und Frequenzkorrekturdatenpakete, die von benachbarten GSM-Basisstationen BS2, BS3 gesendet werden, zu empfangen.

Unter dem Begriff "die Mobilstation wird auf den Empfang zu detektierender und/oder charakteristischer Datenpakete geschaltet" versteht man im Rahmen dieser Anmeldung auch, daß nach der üblichen analogen und digitalen Filterung und gegebenenfalls einer Derotation das empfangene Datenpaket mit der der Trainingssequenz eines charakteristischen Datenpaketes dp und/oder mit der der Trainingssequenz eines zu detektierenden Datenpaketes dp entsprechenden Korrelationsfolge verglichen (z.B. korreliert) wird und somit gleichzeitig bzw. parallel nach zu detektierenden und nach charakteristischen Datenpaketen gesucht wird. Statt einer Korrelation können ggf. auch andere Verfahren angewandt werden (z.B. FIR, IRR oder andere Filter). Falls ein Datenpaket mit ausreichender Qualität empfangen wird, detektiert wird oder die mittels des Datenpaketes transportierte Information mit ausreichender Qualität ermittelt wird etc., kann von einem positiven Empfangsergebnis hinsichtlich dieses Datenpaketes gesprochen werden.

Bei einer Ausführungsvariante kann die Mobilstation MS nun, nach dem Empfang eines Frequenzkorrekturdatenpaketes, Informationen m zur UMTS-Basisstation BS1 senden(FCCH-found), die bewirken, daß zunächst nur noch eine weitere Unterbrechungsphase in den gesendeten Datenstrom eingelegt wird, um das in einem festen Abstand auf das Frequenzkorrekturdatenpaket folgende Synchronisationsdatenpaket zu empfangen. Aufgrund der Kenntnis über die relative zeitliche Position zwischen Frequenzkorrekturdatenpaket und Synchronisationsdatenpaket können die zeitliche Lage und auch die Dauer (da der Zeitschlitz nun bekannt ist) der einzufügenden Unterbrechungsphase an die zeitliche Lage des zu detektierenden Synchronisationsdatenpaketes angepaßt werden. Entsprechende Informationen über die zeitliche Lage eines Frequenzkorrekturdatenpaketes oder eines folgenden Synchronisationsdatenpaketes können mit der FCCHfound-Nachricht übertragen werden.

Eine andere Ausführungsvariante der Erfindung sieht vor, daß zunächst auf die Beobachtung einer ersten benachbarten GSM-Basisstation BS2 geschaltet wird, nach erfolgreicher Suche oder nach Kenntnis über eine nicht erfolgreiche Suche die Nachbarkanalsuche für eine oder mehrere weitere GSM-Basisstationen BS3 durchgeführt wird, und nach erfolgreicher und/oder erfolgloser Beendigung der Nachbarkanalsuche für mehrere benachbarte GSM-Basisstationen BS2,BS3 Informationen m zur Beeinflussung und/oder Einschränkung und/oder Beendigung und/oder gesteuerten Fortsetzung des Einlegens von Unterbrechungsphasen zur UMTS-Basisstation BS1 übermittelt werden. Dazu können die zunächst ermittelten Ergebnisse der Nachbarkanalsuche mittels Speichereinrichtungen SPE in der Mobilstation MS zwischengespeichert werden.

Eine Ausgestaltung der Erfindung sieht vor, daß für den Fall, daß keine Nachbarkanalsuche erfolgreich ist, dies ebenfalls mittels entsprechender Informationen m signalisiert wird (FCCH/SCH-not-found), woraufhin die UMTS-Basisstation zunächst keine weiteren Unterbrechungsphasen in den Downlink-Datenstrom d einfügt.

Bei einer Weiterbildung der Erfindung werden die Ergebnisse der Nachbarkanalsuche, beispielsweise die Identität der Nachbarbasisstation und die Empfangsqualität oder Feldstärke der von den Nachbarbasisstationen empfangenen Signale zusammen mit den Informationen zur Beeinflussung des Einlegens von Unterbrechungsphasen als eine Nachricht, die gegebenenfalls auf mehrere Rahmen aufgeteilt sein kann, zur UMTS-Basisstation BS1 übermittelt.

Bei einer anderen Ausgestaltungsvariante der Erfindung handelt: es sich auch bei der ersten Basisstation BS1 um eine GSM-Basisstation, die Daten gemäß einem GSM-Standard oder einem davon abgeleiteten Standard überträgt.

## Patentansprüche

1. Verfahren zur Datenübertragung in einem Mobilfunksystem, bei dem
- Daten (d) zwischen einer ersten Basisstation (BS1) und zumindest einer Mobilstation (MS) gemäß einem ersten Übertragungsverfahren übertragen werden,
zumindest während bestimmter Übertragungsphasen Unterbrechungsphasen (2) eingelegt werden, in denen die Mobilstation (MS) das Übertragen von Daten (d) unterbricht, und in denen die Mobilstation (MS) auf den Empfang von Datenpaketen (dp), die von einer zweiten Basisstation (BS2) gemäß einem zweiten Übertragungsverfahren gesendet werden, geschaltet wird, wobei die zweite Basisstation (BS2) gemäß dem GSM-Standard oder einem davon abgeleiteten Standard, der ebenfalls auf einer Synchronisationsrahmenstruktur mit einer Periode von 51 Rahmen basiert, funktioniert, **dadurch gekennzeichnet, daß**
Unterbrechungsphasen mit einer effektiven Gesamtdauer von maximal 9 oder maximal 10 Beobachtungsrahmen eingelegt werden.

2. Verfahren nach Anspruch 1, bei dem
- zwischen dem Beginn einer ersten Unterbrechungsphase und einer zweiten Unterbrechungsphase eine Dauer von 52 GSM-Rahmen liegt.

3. Verfahren nach Anspruch 1, bei dem
- zwischen dem Beginn einer ersten Unterbrechungsphase und einer zweiten Unterbrechungsphase eine Dauer von 26 GSM-Rahmen liegt.

4. Verfahren nach Anspruch 1, bei dem
- zwischen dem Beginn einer ersten Unterbrechungsphase und einer zweiten Unterbrechungsphase eine Dauer von n1 GSM-Rahmen liegt, und
- zwischen dem Beginn einer zweiten Unterbrechungsphase und einer dritten Unterbrechungsphase eine Dauer von n2 GSM-Rahmen liegt.

5. Verfahren nach Anspruch 8, bei dem
- zwischen dem Beginn einer ersten Unterbrechungsphase und einer zweiten Unterbrechungsphase eine Dauer von 6 GSM-Rahmen liegt, und
- zwischen dem Beginn einer zweiten Unterbrechungsphase und einer dritten Unterbrechungsphase eine Dauer von 46 GSM-Rahmen liegt.

6. Verfahren nach Anspruch 4, bei dem
- zwischen dem Beginn einer ersten Unterbrechungsphase und einer zweiten Unterbrechungsphase eine Dauer von 16 GSM-Rahmen liegt, und
- zwischen dem Beginn einer zweiten Unterbrechungsphase und einer dritten Unterbrechungsphase eine Dauer von 36 GSM-Rahmen liegt.

7. Verfahren nach einem der vorhergehenden Ansprüche, bei dem
die Mobilstation .(MS) nach dem Empfang eines charakteristischen Datenpaketes und/oder eines zu detektierenden Datenpaketes einer zweiten Basisstation (BS2) Informationen zur Beeinflussung des Einlegens weiterer Unterbrechungsphasen an die erste Basisstation (BS1) übermittelt.

8. Mobilstation (MS) mit
- Mitteln (EE,SE) zum Übertragen von Daten von und zu einer ersten Basisstation (BS1) gemäß einem ersten Übertragungsverfahren,
- Mitteln (STE) zum Einlegen von Pausen zumindest während bestimmter Übertragungsphasen, in denen das Übertragen von Daten unterbrochen wird,
- Mitteln (STE) zum Schalten auf den Empfang von Datenpaketen, die von einer zweiten Basisstationen (BS2) gemäß einem zweiten Übertragungsverfahren gesendet werden, wobei die zweite Basisstation (BS2) gemäß dem GSM-Standard oder einem davon abgeleiteten Standard, der ebenfalls auf einer Synchronisationsrahmenstruktur mit einer Periode von 51 Rahmen basiert, funktioniert, **dadurch gekennzeichnet, daß** Unterbrechungsphasen mit einer effektiven Gesamtdauer von maximal 9 oder maximal 10 Beobachtungsrahmen eingelegt werden.

9. Mobilstation (MS) nach Anspruch 8, bei der
zwischen dem Beginn einer ersten Unterbrechungsphase und einer zweiten Unterbrechungsphase eine Dauer von 52 GSM-Rahmen liegt.

10. Mobilstation (MS) nach Anspruch 8, bei der
zwischen dem Beginn einer ersten Unterbrechungsphase und einer zweiten Unterbrechungsphase eine Dauer von 52 GSM-Rahmen liegt.

11. Mobilstation (MS) nach Anspruch 8, bei der
- zwischen dem Beginn einer ersten Unterbrechungsphase und einer zweiten Unterbrechungsphase eine Dauer von n1 GSM-Rahmen liegt, und
- zwischen dem Beginn einer zweiten Unterbrechungsphase und einer dritten Unterbrechungsphase eine Dauer von n2 GSM-Rahmen liegt.

12. Mobilstation (MS) nach einem der Ansprüche 8 bis 11, mit
- Mitteln zur Ermittlung eines Empfangsergebnis bezüglich der von einer zweiten Basisstation empfangenen Datenpakete, und
- Mitteln (SE) zum Senden von Informationen zur ersten Basisstation, die das Einlegen weiterer Unterbrechungsphasen beeinflussen.

13. Basisstation (BS1) mit
- Mitteln zum Übertragen von Daten von und zu einer Mobilstation (MS),
- Mitteln zum Einlegen von Unterbrechungsphasen zumindest während bestimmter Übertragungsphasen (2), in denen die Mobilstation (MS) das Übertragen von Daten (d) unterbricht, und in denen die Mobilstation (MS) auf den Empfang von Datenpaketen (dp), die von einer zweiten Basisstation (BS2) gemäß einem zweiten Übertragungsverfahren gesendet werden, geschaltet wird, wobei die zweite Basisstation (BS2) gemäß dem GSM-Standard oder ei-nem davon abgeleiteten Standard, der ebenfalls auf einer Synchronisationsrahmenstruktur mit einer Periode von 51 Rahmen basiert, funktioniert **dadurch gekennzeichnet, daß** Unterbrechungsphasen mit einer effektiven Gesamtdauer von maximal 9 oder maximal 10 Beobachtungsrahmen eingelegt werden.

14. Basisstation (BS1) nach Anspruch 13, bei der
- zwischen dem Beginn einer ersten Unterbrechungsphase und einer zweiten Unterbrechungsphase eine Dauer von 52 GSM-Rahmen liegt.

15. Basisstation (BS1) nach Anspruch 13, bei der
zwischen dem Beginn einer ersten Unterbrechungsphase und einer zweiten Unterbrechungsphase eine Dauer von 26 GSM-Rahmen liegt.

16. Basisstation (BS1) nach Anspruch 13, bei der
- zwischen dem Beginn einer ersten Unterbrechungsphase und einer zweiten Unterbrechungsphase eine Dauer von n1 GSM-Rahmen liegt, und
- zwischen dem Beginn einer zweiten Unterbrechungsphase und einer dritten Unterbrechungsphase eine Dauer von n2 GSM-Rahmen liegt.

17. Basisstation (BS1) nach einem der Ansprüche 13 bis 16, mit
- Mitteln zum Empfang von Informationen, die das Einlegen von Unterbrechungsphasen beeinflussen, und
Mitteln zur Beeinflussung des Einlegens von Unterbrechungsphasen in Abhängigkeit von dem Empfangsergebnis.

## Claims

1. Method for data transmission in a mobile radio system, in which
- data (d) are transmitted between a first base station (BS1) and at least one mobile station (MS) on the basis of a first transmission method,
- at least during particular transmission phases, interruption phases (2) are inserted in which the mobile station (MS) interrupts the transmission of data (d) and in which the mobile station (MS) is switched to the reception of data packets (dp) sent by a second base station (BS2) on the basis of a second transmission method, where the second base station (BS2) operates on the basis of the GSM standard or of a standard derived therefrom which is likewise based on a synchronization frame structure having a period of 51 frames, **characterized in that** interruption phases having an effective total duration of a maximum of 9 or of a maximum of 10 observation frames are inserted.

2. Method according to Claim 1, in which
- a period of 52 GSM frames lies between the start of a first interruption phase and a second interruption phase.

3. Method according to Claim 1, in which
- a period of 26 GSM frames lies between the start of a first interruption phase and a second interruption phase.

4. Method according to Claim 1, in which
- a period of n1 GSM frames lies between the start of a first interruption phase and a second interruption phase, and
- a period of n2 GSM frames lies between the start of a second interruption phase and a third interruption phase.

5. Method according to Claim 4, in which
- a period of 6 GSM frames lies between the start of a first interruption phase and a second interruption phase, and
- a period of 46 GSM frames lies between the start of a second interruption phase and a third interruption phase.

6. Method according to Claim 4, in which
- a period of 16 GSM frames lies between the start of a first interruption phase and a second interruption phase, and
- a period of 36 GSM frames lies between the start of a second interruption phase and a third interruption phase.

7. Method according to one of the preceding claims, in which,
after reception of a characteristic data packet and/or of a data packet which is to be detected from a second base station (BS2), the mobile station (MS) transmits information for influencing the insertion of further interruption phases to the first base station (BS1).

8. Mobile station (MS) having
- means (EE, SE) for transmitting data from and to a first base station (BS1) on the basis of a first transmission method,
- means (STE) for inserting pauses at least during particular transmission phases in which the transmission of data is interrupted,
- means (STE) for switching to the reception of data packets sent by a second base station (BS2) on the basis of a second transmission method, where the second base station (BS2) operates on the basis of the GSM standard or of a standard derived therefrom which is likewise based on a synchronization frame structure having a period of 51 frames, **characterized in that** interruption phases having an effective total duration of a maximum of 9 or a maximum of 10 observation frames are inserted.

9. Mobile station (MS) according to Claim 8, in which
a period of 52 GSM frames lies between the start of a first interruption phase and a second interruption phase.

10. Mobile station (MS) according to Claim 8, in which
a period of 52 GSM frames lies between the start of a first interruption phase and a second interruption phase.

11. Mobile station (MS) according to Claim 8, in which
- a period of n1 GSM frames lies between the start of a first interruption phase and a second interruption phase, and
- a period of n2 GSM frames lies between the start of a second interruption phase and a third interruption phase.

12. Mobile station (MS) according to one of Claims 8 to 11, having
- means for ascertaining a reception result for the data packets received from a second base station, and
- means (SE) for sending to the first base station information which influences the insertion of further interruption phases.

13. Base station (BS1) having
- means for transmitting data from and to a mobile station (MS),
- means for inserting interruption phases at least during particular transmission phases (2) in which the mobile station (MS) interrupts the transmission of data (d) and in which the mobile station (MS) is switched to the reception of data packets (dp) sent by a second base station (BS2) on the basis of a second transmission method, where the second base station (BS2) operates on the basis of the GSM standard or of a standard derived therefrom which is likewise based on a synchronization frame structure having a period of 51 frames, **characterized in that** interruption phases having an effective total duration of a maximum of 9 or a maximum of 10 observation frames are inserted.

14. Base station (BS1) according to Claim 13, in which
- a period of 52 GSM frames lies between the start of a first interruption phase and a second interruption phase.

15. Base station (BS1) according to Claim 13, in which
a period of 26 GSM frames lies between the start of a first interruption phase and a second interruption phase.

16. Base station (BS1) according to Claim 13, in which
- a period of n1 GSM frames lies between the start of a first interruption phase and a second interruption phase, and
- a period of n2 GSM frames lies between the start of a second interruption phase and a third interruption phase.

17. Base station (BS1) according to one of Claims 13 to 16, having
- means for receiving information which influences the insertion of interruption phases, and
- means for influencing the insertion of interruption phases on the basis of the reception result.

## Revendications

1. Procédé pour la transmission de données dans un système de téléphonie mobile, dans lequel
- des données (d) sont transmises entre une première station de base (BS1) et au moins une station mobile (MS) selon un premier procédé de transmission,
des phases d'interruption (2), au cours desquelles la station mobile (MS) interrompt la transmission de données (d), et au cours desquelles la station mobile (MS) est commutée sur la réception de paquets de données (dp), qui sont envoyés par une deuxième station de base (BS2) selon un second procédé de transmission, sont insérés au moins pendant certaines phases de transmission, la deuxième station de base (BS2) fonctionnant selon le standard GSM ou selon un standard dérivé de celui-ci, qui est basé également sur une structure de synchronisation avec une période de 51 cadres, **caractérisé en ce que** des phases d'interruption avec une durée globale effective de maximum 9 ou maximum 10 cadres d'observation sont insérées.

2. Procédé selon la revendication 1, dans lequel
- une durée de 52 cadres GSM se situe entre le début d'une première phase d'interruption et une deuxième phase d'interruption.

3. Procédé selon la revendication 1, dans lequel
- une durée de 26 cadres GSM se situe entre le début d'une première phase d'interruption et une deuxième phase d'interruption.

4. Procédé selon la revendication 1, dans lequel
- une durée de n1 cadres GSM se situe entre le début d'une première phase d'interruption et une deuxième phase d'interruption, et
- une durée de n2 cadres GSM se situe entre le début d'une deuxième phase d'interruption et une troisième phase d'interruption.

5. Procédé selon la revendication 4, dans lequel
- une durée de 6 cadres GSM se situe entre le début d'une première phase d'interruption et une deuxième phase d'interruption, et
- une durée de 46 cadres GSM se situe entre le début d'une deuxième phase d'interruption et une troisième phase d'interruption.

6. Procédé selon la revendication 4, dans lequel
- une durée de 16 cadres GSM se situe entre le début d'une première phase d'interruption et une deuxième phase d'interruption, et
- une durée de 36 cadres GSM se situe entre le début d'une deuxième phase d'interruption et une troisième phase d'interruption.

7. Procédé selon l'une quelconque des revendications précédentes, dans lequel
la station mobile (MS) transmet à la première station de base (BS1) des informations pour influencer l'insertion d'autres phases d'interruption après la réception d'un paquet de données caractéristique et/ou d'un paquet de données à détecter d'une deuxième station de base (BS2).

8. Station mobile (MS) comprenant
- des moyens (EE, SE) pour la transmission de données à partir d'une et vers une première station de base (BS1) selon un premier procédé de transmission,
- des moyens (STE) pour l'insertion de pauses au moins pendant certaines phases de transmission, au cours desquelles la transmission de paquets est interrompue,
- des moyens (STE) pour la commutation sur la réception de paquets de données, qui sont envoyés par une deuxième station de base (BS2), selon un second procédé de transmission, la deuxième station de base (BS2) fonctionnant selon le standard GSM ou un standard dérivé de celui-ci, qui est basé également sur une structure de base de synchronisation avec une période de 51 cadres, **caractérisée en ce que** des phases d'interruption avec une durée globale effective de maximum 9 ou maximum 10 cadres d'observation sont insérées.

9. Station mobile (MS) selon la revendication 8, dans laquelle une durée de 52 cadres GSM se situe entre le début d'une première phase d'interruption et une deuxième phase d'interruption.

10. Station mobile (MS) selon la revendication 8, dans laquelle une durée de 52 cadres GSM se situe entre le début d'une première phase d'interruption et une deuxième phase d'interruption.

11. Station mobile (MS) selon la revendication 8 dans laquelle
- une durée de n1 cadres GSM se situe entre le début d'une première phase d'interruption et une deuxième phase d'interruption, et
- une durée de n2 cadres GSM se situe entre le début d'une deuxième phase d'interruption et une troisième phase d'interruption.

12. Station mobile (MS) selon l'une quelconque des revendications 8 à 11, comprenant
- des moyens pour la détermination d'un résultat de réception concernant les paquets de données reçus d'une deuxième station de base, et
- des moyens (SE) pour l'envoi d'informations à la première station de base, qui influencent l'insertion d'autres phases d'interruption.

13. Station de base (BS1) comprenant
- des moyens pour la transmission de données à partir d'une et vers une station mobile (MS),
- des moyens pour l'insertion de phases d'interruption au moins pendant certaines phases de transmission (2), au cours desquelles la station mobile (MS) interrompt la transmission de données (d) et au cours desquelles la station mobile (MS) est commutée sur la réception de paquets de données (dp), qui sont envoyés à partir d'une deuxième station de base (BS2) selon un second procédé de transmission, la deuxième station de base (BS2) fonctionnant selon le standard GSM ou un standard dérivé de celui-ci, qui est basé également sur une structure de base de synchronisation avec une période de 51 cadres, **caractérisée en ce que** des phases d'interruption avec une durée globale effective de maximum 9 ou maximum 10 de cadres d'observation sont insérées.

14. Station de base (BS1) selon la revendication 13, dans laquelle
- une durée de 52 cadres GSM se situe entre le début d'une première phase d'interruption et une deuxième phase d'interruption.

15. Station de base (BS1) selon la revendication 13, dans laquelle une durée de 26 cadres GSM se situe entre le début d'une première phase d'interruption et une deuxième phase d'interruption.

16. Station de base (BS1) selon la revendication 13, dans laquelle
- une durée de n1 cadres GSM se situe entre le début d'une première phase d'interruption et une deuxième phase d'interruption, et
- une durée de n2 cadres GSM se situe entre le début d'une deuxième phase d'interruption et une troisième phase d'interruption.

17. Station de base (BS1) selon l'une quelconque des revendications 13 à 16, comprenant
- des moyens pour la réception d'informations qui influencent l'insertion de phases d'interruption, et
- des moyens pour influencer l'insertion de phases d'interruption en fonction du résultat de la réception.
